# EUROPÄISCHE PATENTSCHRIFT

(11) **EP 2 633 099 B1**
(45) Veröffentlichungstag und Bekanntmachung des Hinweises auf die Patenterteilung: **03.07.2019**
(21) Anmeldenummer: 11782079.5
(22) Anmeldetag: 26.10.2011
(51) Int. Cl.: C23C 22/48, C23C 22/53, C23C 22/56, C23C 22/68, C23C 22/74, C23C 22/83, C23C 22/60, C23C 22/66, C09D 1/04, C09D 5/08

(54) **WÄSSERIGE ZUSAMMENSETZUNG ZUR VORBEHANDLUNG EINER METALLISCHEN OBERFLÄCHE VOR EINER WEITEREN BESCHICHTUNG ODER ZUR BEHANDLUNG JENER OBERFLÄCHE**
AQUEOUS COMPOSITION FOR PRETREATING A METAL SURFACE BEFORE APPLYING ANOTHER COATING OR FOR TREATING SAID SURFACE
COMPOSITION AQUEUSE POUR LE PRÉTRAITEMENT D'UNE SURFACE MÉTALLIQUE AVANT UN AUTRE REVÊTEMENT OU POUR LE TRAITEMENT DE CETTE SURFACE

(30) Priorität: 27.10.2010 DE 102010043002
(43) Veröffentlichungstag der Anmeldung: 04.09.2013
(73) Patentinhaber: Chemetall GmbH, 60487 Frankfurt am Main (DE)
(72) Erfinder: BUKEIKHANOVA, Saule, 60325 Frankfurt (DE); KOMANDER, Mathias, 63225 Lange (DE)
(74) Vertreter: BASF IP Association
(86) Internationale Anmeldenummer: PCT/EP2011/068742
(87) Internationale Veröffentlichungsnummer: WO 2012/055908

(56) Entgegenhaltungen:
- EP-A1- 0 648 823
- EP-A1- 2 223 975
- WO-A1-2007/075050
- JP-A- 52 050 940
- US-A- 4 828 616
- US-A- 5 415 688
- US-A- 5 451 431

## Beschreibung

Die Erfindung betrifft eine wässerige Zusammensetzung zur Vorbehandlung einer metallischen Oberfläche vor einer weiteren Beschichtung oder zur Behandlung jener Oberfläche.

Für den Korrosionsschutz von metallischen Konstruktionswerkstoffen werden verschiedene Methoden eingesetzt, die die Oberfläche schützen und die Haftung von Lackschichten verbessern sollen. Durch das Aufbringen von Chrom-(VI)- oder Chrom-(III)-haltigen Phosphatschichten auf metallischen Konstruktionswerkstoffen wie feuerverzinktem (schmelztauchverzinktem) oder Walz-Stahl (HDG, Z, "Galvanneal"), elektrolytisch verzinktem Stahl (EZ), Zink/Aluminium-Abscheidung ("Galfan", ZA), Alumium/Zink-Abscheidung ("Galvalume", AZ), Zink/Magnesium (ZMg), Aluminium, vorvergüteter, korrosionsfester Stahl (CRS) oder Reinzink wird deren Oberfläche gegen elektrochemische Korrosionsangriffe passiviert und die Haftung von Lackschichten verbessert. Im Hinblick auf toxischen Eigenschaften von Chrom-(VI)- aber auch Chrom-(III)-verbindungen gibt es Bestrebungen, deren Anteil in den zur Vorbehandlung einer metallischen Oberfläche vor einer weiteren Beschichtung eingesetzten, wässerigen Zusammensetzung und den damit gebildeten Oberflächenbeschichtungen zu reduzieren oder vollständig zu vermeiden.

Das Dokument DE 19814605 A1 beschreibt eine wässrige Dispersion zur Versiegelung von metallischen Oberflächen, die wenigstens ein Silanderivat und eine kolloidale Kieselsäure und/oder ein kolloidales Silikat enthalten. Dabei werden als Silanderivat Epoxid- und/oder hydrolysierte Epoxysilane wie Glycidyloxypropyltrimethoxysilan oder hydroxyliertes 3-Glycidyloxypropyltrimethoxysilan zusammen mit Lithiumpolysilikat eingesetzt. Die beschriebenen wässrigen Dispersionen weisen jedoch deutliche Nachteile gegenüber den bekannten Chromatier-Verfahren hinsichtlich des damit erzielten Korrosionsschutzes der damit behandelten metallischen Konstruktionswerkstoffe auf. EP 0 648 823 A1 offenbart eine wässrige Zusammensetzung zur Vorbehandlung metallischen Oberflächen, welche neben Wasser 0,005 bis 0,12 Gew.% Natriumwasserglas, 0,01 bis 0,25 Gew.% Silan und 0,008 bis 0,2 Gew. % Polyacrylamid-Copolymer enthält.

Es besteht deshalb weiterhin das Bedürfnis nach einer wässerigen Zusammensetzung zur Vorbehandlung einer metallischen Oberfläche vor einer weiteren Beschichtung oder zur Behandlung von Oberflächen metallischer Konstruktionswerkstoffe.

Die gestellte Aufgabe wird durch eine wässerige Zusammensetzung gemäß Anspruch 1 gelöst.

Die wässrige Zusammensetzung enthält neben Wasser a) mindestens Natrium-, Kalium- und/oder Ammoniumwasserglas und b) mindestens ein Silan, wobei das Mengenverhältnis von a) zu b) jeweils einschließlich der hieraus entstehenden Reaktionsprodukte vorzugsweise im Bereich von 0,1 : 1 bis 2 : 1 liegt. Als Wasser wird vorzugsweise im technischen Sinne voll entsalztes (VE) Wasser mit einer Leitfähigkeit im Bereich von 0,01 bis 1,00 µS/cm oder vergleichbares, destilliertes Wasser eingesetzt.

In der zur Vorbehandlung eingesetzten Zusammensetzung entspricht die Konzentration a) an Wasserglas 0,5 bis 10 Gew.-% und b) an Silan 0,05 bis 2 Gew.-%. In einem Konzentrat der wässerigen Zusammensetzung entspricht die Konzentration a) an Wasserglas 10 bis 30 Gew.-% und b) an Silan in einer Menge von 1,5 bis 5 Gew.-%.

Vorzugsweise weist das Silan in der wässerigen Zusammensetzung ein oder zwei Aminogruppen auf.

Das Silan weist eine oder mehrere Aminogruppen auf und ist aus der Gruppe bestehend aus Aminoalkylaminoalkylalkyldialkoxysilan, Bis(trialkoxysilylalkyl)amin, Aminoalkyltrialkoxysilan, Aminoalkyl-aminoalkyltrialkoxysilan ausgewählt.

Insbesondere weist das Silan eine Aminogruppe auf und ist aus der Gruppe bestehend aus Bis(triethoxysilylpropyl)amin, Bis(trimethoxysilylpropyl)amin, Gamma-Aminopropyltriethoxysilan, Gamma-Aminopropyltrimethoxysilan, ausgewählt.

Alternativ weist das Aminosilan zwei oder mehrere Aminogruppen auf und ist aus der Gruppe bestehend aus Gamma-Ureidopropyltrialkoxysilan, N-(3-(Trimethoxysilyl)propyl)ethylendiamin, N-beta-(Aminoethyl)-gamma-aminopropyltriethoxysilan, N-beta-(Aminoethyl)-gamma-aminopropyltrimethoxysilan, N-(gamma-triethoxysilylpropyl)diethylentriamin, N-(gamma-trimethoxysilylpropyl)diethylentriamin, Polyaminoalkylethyldialkoxysilan, Polyaminoalkylmethyldialkoxysilan, ausgewählt.

Die wässrige Zusammensetzung enthält c) mindestens ein organischer Korrosionsinhibitor ausgewählt aus heterozyklischen Verbindungen, Kohlensäureamiden und/oder Acetylacetonaten in einer Menge von 0,01 bis 3 Gew.-%.

Die heterozyklische Verbindungen wird ausgewählt aus der Gruppe bestehend aus Mercaptobenzothiazol, Benzotriazol, Imidazol, Benzimidazol, Hydroxychinolin, 2-Mercaptobenzimidazol, das Kohlensäureamide wird ausgewählt aus der Gruppe bestehend aus Harnstoff, Thioharnstoff, Dimethylthioharnstoff, Diethylthioharnstoff, Dibutylthioharnstoff, Allylthioharnstoff, Methylthioharnstoff, Thiosemicarbazid, und/oder das Acetylacetonate wird ausgewählt aus der Gruppe bestehend aus denen der Metalle: Mangan, Vanadium, Titan, Zirkonium.

Der organische Korrosionsinhibitor wird der wässerigen Zusammensetzung vorzugsweise in einer Menge von 0,01 bis 0,7 Gew.-% in der zur Vorbehandlung eingesetzten Zusammensetzung zugegeben.

Im Konzentrat der wässerigen Zusammensetzung wird der organische Korrosionsinhibitor in einer Menge von 0,5 bis 3 Gew.-% zugegeben.

Vorteilhafter Weise wird der wässerigen Zusammensetzung weiterhin d) mindestens ein Additiv ausgewählt aus Farbstoffen oder UV-Licht-Indikatoren, Netzmitteln oder Verlaufsadditiven und/oder pH-Wert-Regulatoren in einer Menge von 0,01 bis 15 Gew.-% zugegeben.

Als Farbstoffe oder UV-Licht-Indikatoren werden: Rhodamine B, Malachitgrün, Eosin B, Natrium-Fluorescein, (Ciba Blue, Ciba Yellow, EXP0665 UV, CBS-X Optical Brightener) als Netzmitteln oder Verlaufsadditiven: (Triton DF-16, Zonyl® FSO) und/oder als pH-Wert-Regulatoren: Essigsäure, Ammoniak, Kaliumhydroxid, Natriumhydroxid, Salpetersäure, Phosphorsäure, Schwefelsäure der wässerigen Zusammensetzung zugegeben.

In der zur Vorbehandlung eingesetzten wässerigen Zusammensetzung wird das Additiv in einer Menge von 0,01 bis 5 Gew.-% der Zusammensetzung zugegeben.

Im Konzentrat der wässerigen Zusammensetzung wird das Additiv in einer Menge von 0,5 bis 15 Gew.-% der Zusammensetzung zugegeben.

Die wässerige Zusammensetzung wird erfindungsgemäß hergestellt, in dem zu Wasser a) mindestens Natrium-, Kalium- und/oder Ammoniumwasserglas und b) mindestens ein Silan zugegeben werden, wobei das Mengenverhältnis von a) zu b) jeweils einschließlich der hieraus entstehenden Reaktionsprodukte vorzugsweise im Bereich von 0,1 : 1 bis 2 : 1 liegt. In der Regel wird dazu VE-Wasser mit einer Leitfähigkeit im Bereich von 0,01 bis 1,00 µS/cm vorgelegt, Korrosionsinhibitoren c) zugegeben und nötigenfalls durch pH-Wert-Einstellung mit Hilfe von Säuren und/oder Laugen gelöst. Anschließend werden gegebenenfalls die weiteren Additive zugesetzt. In die wässrige Zusammensetzung wird dann unter Rühren die Menge an Wasserglas gefolgt von der Zugabe des unverdünnten Silans eingebracht. Eine gelegentlich auftretende Trübung verschwindet nach ungefähr 15 Minuten Rührzeit.

Die wird durch Aufwalzen, Fluten, Aufrakeln, Spritzen, Sprühen, Streichen oder Tauchen und ggf. durch nachfolgendes Abquetschen mit einer Rolle auf den metallischen Konstruktionswerkstoffen ausgewählt aus der Gruppe bestehend aus feuerverzinktem oder Walz-Stahl, elektrolytisch verzinktem Stahl, mit Zink/Aluminium-Abscheidung, Alumium/Zink-Abscheidung oder Zink/Magnesium-Abscheidung versehenem Stahl, Aluminium oder Aluminiumlegierungen, vorvergütetem korrosionsfesten Stahl oder Reinzink aufgetragen. Vorzugsweise werden die metallischen Konstruktionswerkstoffe lediglich mit der wässerigen Zusammensetzung beschichtet und passiviert. Der optische Eindruck des metallischen Konstruktionswerkstoffs bleibt dadurch nahezu unverändert erhalten.

Alternativ wird auf die mit der wässerigen Zusammensetzung erzeugten, getrockneten Beschichtung jeweils mindestens eine Beschichtung aus Druckfarbe, Folie, Lack, lackähnlichem Material, Pulverlack, Klebstoff oder/und Klebstoffträger aufgebracht. Es werden Beschichtungen ausgewählt aus den Klassen der Polyvinylchlorid-, zwei Komponenten (2K) Epoxy-Primer-, Acrylat-, 2K-Polyurethan-, 2K-Fluorpolymer- und Polyester-Systemen eingesetzt.

Vorteilhafter Weise wird die wässerige Zusammensetzung bei einer Temperatur im Bereich von 5 bis 50°C auf die metallische Oberfläche aufgebracht, wobei die metallische Oberfläche bei der Applikation der Beschichtung auf Temperaturen im Bereich von 5 bis 60°C gehalten und die beschichtete metallische Oberfläche bei einer Temperatur im Bereich von 20 bis 400°C Umlufttemperatur getrocknet wird.

Die beschichteten Bänder werden zu einem Coil aufgewickelt, ggf. nach einer Abkühlung auf eine Temperatur im Bereich von 40 bis 70°C.

Die mit der erfindungsgemäßen Beschichtungszusammensetzung behandelten Substrate zeigen nur eine Beizabtragsrate im Bereich von 0,01 bis 2,0 g/m^{2·}h. Die Beschichtungszusammensetzungen sind im Rahmen der Messgenauigkeit Schwermetall- und Fluoridionen-frei.

Nachfolgend wird die Erfindung an Hand von fünf Ausführungsbeispielen näher erläutert.

### Beispiel 1 (das Beispiel gehört nicht zur Erfindung)

Eine wässerige Zusammensetzung, bestehend aus Kalium- oder Natriumwasserglas im Bereich von 0,5 bis 10 Gew.-% und mindestens einem Aminosilan im Bereich von 0,05 bis 2 Gew.-% wurde mittels Laborcoater auf alkalisch gereinigten, feuerverzinkten Stahlblechen appliziert. Anschließend wurde die aufgebrachte Schicht in einem Trockenschrank bei einer Temperatur von 150°C für eine Minute getrocknet. Danach wurde ein aus Primer und TopCoat auf Basis Polyester/Polyester bestehendes Coil-Coating-Lacksystem, welches für den Architekturbereich vorgesehen ist, aufgebracht und entsprechend eingebrannt.

Um die Rückseite der Bleche vor Korrosion zu schützen wurde ein 2K-Polyester Klarlack aufgebracht.

Nach dem definierten Anritzen der Proben wurden diese in einer Salzsprühkammer auf ihr Korrosionsverhalten hin untersucht. Die Haftfestigkeit der Beschichtung wurde im T-Bend Test geprüft.

| Lackabplatzung nach T-Bend Test (%) | | NSS-Test nach DIN EN ISO 9227 (Unterwanderung ausgehend vom Ritz in mm) | | | | |
|---|---|---|---|---|---|---|
| T0 | T1 | 240 h | 360 h | 504 h | 720 h | 1008 h |
| 25 | 18 | <1 | <1 | 1 | 1,8 | 2,5 |

### Beispiel 2

Eine wässerige Zusammensetzung, bestehend aus Kalium- oder Natriumwasserglas im Bereich von 0,5 bis 10 Gew.-%, mindestens einem Aminosilan, welches zwei Aminogruppen aufweist, im Bereich von 0,05 bis 2 Gew.-%, und mindestens einem schwefelhaltigen Kohlensäureamid im Bereich von 0,01 bis 0,7 Gew.-% wurde mittels Laborcoater auf alkalisch gereinigten, feuerverzinkten Stahlblechen appliziert. Anschließend wurde die aufgebrachte Schicht in einem Trockenschrank bei einer Temperatur von 150°C für eine Minute getrocknet. Danach wurde ein aus Primer und TopCoat auf Basis Polyester/Polyester bestehendes Coil-Coating-Lacksystem, welches für den Architekturbereich vorgesehen ist, aufgebracht und entsprechend eingebrannt.

Um die Rückseite der Bleche vor Korrosion zu schützen wurde ein 2K-Polyester Klarlack aufgebracht.

Nach dem definierten Anritzen der Proben wurden diese in einer Salzsprühkammer auf ihr Korrosionsverhalten hin untersucht. Die Haftfestigkeit der Beschichtung wurde im T-Bend Test geprüft.

| Lackabplatzung nach T-Bend Test | | NSS-Test nach DIN EN ISO 9227 (Unterwanderung ausgehend vom Ritz in mm) | | | | |
|---|---|---|---|---|---|---|
| T0 | T1 | 240 h | 360 h | 504 h | 720 h | 1008 h |
| <5 % | nur Risse | <1 | <1 | <1 | <1 | 1,8 |

### Beispiel 3

Eine wässerige Zusammensetzung, bestehend aus Kalium- oder Natriumwasserglas im Bereich von 0,5 bis 10 Gew.-%, mindestens einem Aminosilan, welches zwei Aminogruppen aufweist, im Bereich von 0,05 bis 2 Gew.-% , mindestens einer schwefelhaltigen heterozyklischen Verbindung im Bereich von 0,01 bis 0,7 Gew.-%, einem basischen Additiv zur Einstellung des pH-Wertes im Bereich von 0,01 bis 15 Gew.-% und mindestens einem Verlaufsadditiv im Bereich von 0,01 bis 15 Gew.-% wurde mittels Laborcoater auf alkalisch gereinigten, Zink/Magnesium-Blechen appliziert. Anschließend wurde die aufgebrachte Schicht in einem Trockenschrank bei einer Temperatur von 150°C für eine Minute getrocknet. Danach wurde ein aus Primer und TopCoat auf Basis Polyurethan/Polyester bestehendes Coil-Coating-Lacksystem, welches für den Architekturbereich vorgesehen ist, aufgebracht und entsprechend eingebrannt.

Um die Rückseite der Bleche vor Korrosion zu schützen wurde ein 2K-Polyester Klarlack aufgebracht.

Nach dem definierten Anritzen der Proben wurden diese in einer Salzsprühkammer auf ihr Korrosionsverhalten hin untersucht. Die Haftfestigkeit der Beschichtung wurde im T-Bend Test geprüft.

| Lackabplatzung nach T-Bend Test | | NSS-Test nach DIN EN ISO 9227 (Unterwanderung ausgehend vom Ritz in mm) | | | | |
|---|---|---|---|---|---|---|
| T0 | T1 | 240 h | 360 h | 504 h | 720 h | 1008 h |
| nur Risse | nur Risse | <1 | <1 | <1 | <1 | 1 |

Beispiel 4 (das Beispiel gehört nicht zur Erfindung) Die wässerige Zusammensetzung, bestehend aus Kalium- oder Natriumwasserglas im Bereich von 0,5 bis 10 Gew.-%, mindestens einem Aminosilan, welches zwei Aminogruppen aufweist, im Bereich von 0,05 bis 2 Gew.-% wurde mittels Laborcoater auf alkalisch gereinigten, Aluminium-Blechen appliziert. Anschließend wurde die aufgebrachte Schicht in einem Trockenschrank bei einer Temperatur von 150°C für eine Minute getrocknet. Danach wurde ein aus Primer und TopCoat auf Basis Polyester/Polyester bestehendes Coil-Coating-Lacksystem, welches für den Architekturbereich vorgesehen ist, aufgebracht und entsprechend eingebrannt.

Um die Rückseite der Bleche vor Korrosion zu schützen wurde ein 2K-Polyester Klarlack aufgebracht.

Nach dem definierten Anritzen der Proben wurden diese in einer Salzsprühkammer auf ihr Korrosionsverhalten hin untersucht. Die Haftfestigkeit der Beschichtung wurde im T-Bend Test geprüft.

| Lackabplatzung nach T-Bend Test | | NSS-Test nach DIN EN ISO 9227 (Unterwanderung ausgehend vom Ritz in mm) | | | | |
|---|---|---|---|---|---|---|
| T0 | T1 | 240 h | 360 h | 504 h | 720 h | 1008 h |
| nur Risse | nur Risse | 0 | 0 | 0 | <1 | <1 |

### Beispiel 5

Die wässerige Zusammensetzung, bestehend aus Kalium- oder Natriumwasserglas im Bereich von 0,5 bis 10 Gew.-%, mindestens einem Aminosilan, welches zwei Aminogruppen aufweist, im Bereich von 0,05 bis 2 Gew.-% und mindestens einem metallhaltigen Acetylacetonat im Bereich von 0,01 bis 0,7 Gew.-% wurde mittels Laborcoater auf alkalisch gereinigten, Galfan-Blechen appliziert. Anschließend wurde die aufgebrachte Schicht in einem Trockenschrank bei einer Temperatur von 150°C für eine Minute getrocknet. Danach wurde ein aus Primer und TopCoat auf Basis Polyester/Polyurethan bestehendes Coil-Coating-Lacksystem, welches für den Architekturbereich vorgesehen ist, aufgebracht und entsprechend eingebrannt.

Um die Rückseite der Bleche vor Korrosion zu schützen wurde ein 2K-Polyester Klarlack aufgebracht.

Nach dem definierten Anritzen der Proben wurden diese in einer Salzsprühkammer auf ihr Korrosionsverhalten hin untersucht. Die Haftfestigkeit der Beschichtung wurde im T-Bend Test geprüft.

| Lackabplatzung nach T-Bend Test | | NSS-Test nach DIN EN ISO 9227 (Unterwanderung ausgehend vom Ritz in mm) | | | | |
|---|---|---|---|---|---|---|
| T0 | T1 | 240 h | 360 h | 504 h | 720 h | 1008 h |
| ok | ok | <1 | 1 | 1,2 | 2,3 | 2,6 |

## Patentansprüche

1. Wässerige Zusammensetzung zur Vorbehandlung eines metallischen Konstruktionswerkstoffes ausgewählt aus der Gruppe bestehend aus feuerverzinktem oder Walz-Stahl, elektrolytisch verzinktem Stahl, mit Zink/Aluminium-Abscheidung, Alumium/Zink-Abscheidung oder Zink/Magnesium-Abscheidung versehenem Stahl, Aluminium oder Aluminiumlegierungen, vorvergüteten korrosionsfesten Stahl oder Reinzink vor einer weiteren Beschichtung oder zur Behandlung jenes Konstruktionswerkstoffes, erhalten dadurch, dass zu Wasser
a) mindestens Natrium-, Kalium- und/oder Ammoniumwasserglas,
b) mindestens ein Silan und
c) mindestens ein organischer Korrosionsinhibitor ausgewählt aus
heterozyklischen Verbindungen,
Kohlensäureamiden und/oder
Acetylacetonaten
in einer Menge von 0,01 bis 3 Gew.-%
zugegeben werden,
wobei das Mengenverhältnis von a) zu b) jeweils einschließlich der hieraus entstehenden Reaktionsprodukte im Bereich von 0,1 : 1 bis 2 : 1 liegt und wobei die Konzentration in der zur Vorbehandlung eingesetzten Zusammensetzung
a) an Wasserglas 0,5 bis 10 Gew.-% und
b) an Silan 0,05 bis 2 Gew.-%
entspricht.

2. Wässerige Zusammensetzung nach Anspruch 1 , **dadurch gekennzeichnet, dass** das Silan ein oder zwei Aminogruppen aufweist.

3. Wässerige Zusammensetzung nach Anspruch 2, **dadurch gekennzeichnet, dass** das Silan eine oder mehrere Aminogruppen aufweist und aus der Gruppe bestehend aus
Aminoalkylaminoalkylalkyldialkoxysilan,
Bis(trialkoxysilylalkyl)amin,
Aminoalkyltrialkoxysilan,
Aminoalkyl-aminoalkyltrialkoxysilan,
ausgewählt ist.

4. Wässerige Zusammensetzung nach Anspruch 2, **dadurch gekennzeichnet, dass** das Silan eine Aminogruppen aufweist und aus der Gruppe bestehend aus
Bis(triethoxysilylpropyl)amin,
Bis(trimethoxysilylpropyl)amin,
Gamma-Aminopropyltriethoxysilan,
Gamma-Aminopropyltrimethoxysilan,
ausgewählt ist.

5. Wässerige Zusammensetzung nach Anspruch 2, **dadurch gekennzeichnet, dass** das Aminosilan zwei oder mehrere Aminogruppen aufweist und aus der Gruppe bestehend aus
Gamma-Ureidopropyltrialkoxysilan,
N-(3-(Trimethoxysilyl)propyl)ethylendiamin,
N-beta-(Aminoethyl)-gamma-aminopropyltriethoxysilan,
N-beta-(Aminoethyl)-gamma-aminopropyltrimethoxysilan,
N-(gamma-triethoxysilylpropyl)diethylentriamin,
N-(gamma-trimethoxysilylpropyl)diethylentriamin,
Polyaminoalkylethyldialkoxysilan,
Polyaminoalkylmethyldialkoxysilan,
ausgewählt ist.

6. Wässerige Zusammensetzung nach mindestens einem der Ansprüche 1 bis 5, **dadurch gekennzeichnet, dass**
mindestens eine heterozyklische Verbindungen, ausgewählt aus der Gruppe bestehend aus
Mercaptobenzothiazol, Benzotriazol, Imidazol, Benzimidazol, Hydroxychinolin, 2-Mercaptobenzimidazol,
mindestens ein Kohlensäureamide, ausgewählt aus der Gruppe bestehend aus Harnstoff, Thioharnstoff, Dimethylthioharnstoff, Diethylthioharnstoff,
Dibutylthioharnstoff, Allylthioharnstoff, Methylthioharnstoff, Thiosemicarbazid, und/oder
mindestens ein Acetylacetonate, ausgewählt aus der Gruppe bestehend aus denen der Metalle Mangan, Vanadium, Titanium, Zirkonium zugegeben werden.

7. Wässerige Zusammensetzung nachmindestens einem der Ansprüche 1 bis 6, **dadurch gekennzeichnet, dass** der organische Korrosionsinhibitor in einer Menge von 0,01 bis 0,7 Gew.-% in der zur Vorbehandlung eingesetzten Zusammensetzung zugegeben wird.

8. Wässerige Zusammensetzung nach mindestens einem der Ansprüche 1 bis 6, **dadurch gekennzeichnet, dass** der organische Korrosionsinhibitor in einer Menge von 0,5 bis 3 Gew.-% in einem Konzentrat der Zusammensetzung zugegeben wird.

9. Wässerige Zusammensetzung nach mindestens einem der Ansprüche 1 bis 8, **dadurch gekennzeichnet, dass**
d) mindestens ein Additiv ausgewählt aus
Farbstoffen oder UV-Licht-Indikatoren,
Netzmitteln oder Verlaufsadditiven und/oder
pH-Wert-Regulatoren
in einer Menge von 0,01 bis 15 Gew.-% zugegeben wird.

10. Wässerige Zusammensetzung nach Anspruch 9, **dadurch gekennzeichnet, dass** als Farbstoffe oder UV-Licht-Indikatoren:
Rhodamine B, Malachitgrün, Eosin B, Natrium-Fluorescein,
als Netzmittel oder Verlaufsadditive und/oder
als pH-Wert-Regulatoren: Essigsäure, Ammoniak, Kaliumhydroxid, Natriumhydroxid, Salpetersäure, Phosphorsäure, Schwefelsäure
zugegeben werden.

11. Wässerige Zusammensetzung nach Anspruch 9 oder 10, **dadurch gekennzeichnet, dass** das Additiv in einer Menge von 0,01 bis 5 Gew.-% in der zur Vorbehandlung eingesetzten Zusammensetzung zugegeben wird.

12. Wässerige Zusammensetzung nach Anspruch 9 oder 10, **dadurch gekennzeichnet, dass** das Additiv in einer Menge von 0,5 bis 15 Gew.-% in einem Konzentrat der Zusammensetzung zugegeben wird.

13. Verfahren zur Vorbehandlung eines metallischen Konstruktionswerkstoffes oder zur Behandlung jenes Konstruktionswerkstoffes, **dadurch gekennzeichnet, dass** eine wässerige Zusammensetzung nach einem der vorstehenden Ansprüche durch Aufwalzen, Fluten, Aufrakeln, Spritzen, Sprühen, Streichen oder Tauchen auf einen metallischen Konstruktionswerkstoff ausgewählt aus der Gruppe bestehend aus feuerverzinktem oder Walz-Stahl, elektrolytisch verzinktem Stahl, mit Zink/Aluminium-Abscheidung, Alumium/Zink-Abscheidung oder Zink/Magnesium-Abscheidung versehenem Stahl, Aluminium oder Aluminiumlegierungen, vorvergüteten korrosionsfesten Stahl oder Reinzink aufgetragen wird.

14. Verfahren nach Anspruch 13, **dadurch gekennzeichnet, dass** der metallische Konstruktionswerkstoff lediglich mit der wässerigen Zusammensetzung beschichtet wird.

15. Verfahren nach Anspruch 13, **dadurch gekennzeichnet, dass** auf die getrocknete Beschichtung jeweils mindestens eine Beschichtung aus Druckfarbe, Folie, Lack, lackähnlichem Material, Pulverlack, Klebstoff oder/und Klebstoffträger aufgebracht wird.

## Claims

1. An aqueous composition for pretreating a metallic construction material selected from the group consisting of hot-dip-galvanized or rolled steel, electrolytically galvanized steel, steel provided with zinc/aluminum deposition, aluminum/zinc deposition, or zinc/magnesium deposition, aluminum or aluminum alloys, prehardened corrosion-resistant steel, or pure zinc before further coating or for treating said construction material, obtained by adding
a) at least sodium, potassium, and/or ammonium water glass,
b) at least one silane, and
c) at least one organic corrosion inhibitor selected from
heterocyclic compounds,
carbonamides, and/or
acetylacetonates
in a quantity of 0.01 to 3% by weight,
wherein the quantity ratio of a) to b), in each case including the reaction products arising therefrom, is in the range from 0.1:1 to 2:1 and wherein the concentration in the composition used for the pretreatment corresponds to
a) 0.5 to 10% by weight water glass and
b) 0.05 to 2% by weight silane.

2. The aqueous composition according to claim 1, wherein the silane has one or two amino groups.

3. The aqueous composition according to claim 2, wherein the silane has one or more amino groups and is selected from the group consisting of
aminoalkylaminoalkylalkyldialkoxysilane,
bis(trialkoxysilylalkyl)amine,
aminoalkyltrialkoxysilane,
aminoalkyl-aminoalkyltrialkoxysilane.

4. The aqueous composition according to claim 2, wherein the silane has one amino group and is selected from the group consisting of
bis(triethoxysilylpropyl)amine,
bis(trimethoxysilylpropyl)amine,
gamma-aminopropyltriethoxysilane,
gamma-aminopropyltrimethoxysilane.

5. The aqueous composition according to claim 2, wherein the aminosilane has two or more amino groups and is selected from the group consisting of
gamma-ureidopropyltrialkoxysilane,
N-(3-(trimethoxysilyl)propyl)ethylenediamine,
N-beta-(aminoethyl)-gamma-aminopropyltriethoxysilane,
N-beta-(aminoethyl)-gamma-aminopropyltrimethoxysilane,
N-(gamma-triethoxysilylpropyl)diethylenetriamine,
N-(gamma-trimethoxysilylpropyl)diethylenetriamine,
polyaminoalkylethyldialkoxysilane,
polyaminoalkylmethyldialkoxysilane.

6. The aqueous composition according to at least one of claims 1 to 5, wherein
at least one heterocyclic compound selected from the group consisting of
mercaptobenzothiazole, benzotriazole, imidazole, benzimidazole, hydroxyquinoline, 2-mercaptobenzimidazole,
at least one carbonamide selected from the group consisting of
urea, thiourea, dimethylthiourea, diethylthiourea, dibutylthiourea, allylthiourea, methylthiourea, thiosemicarbazide, and/or
at least one acetylacetonate selected from the group consisting of those of the metals manganese, vanadium, titanium, zirconium
are added.

7. The aqueous composition according to at least one of claims 1 to 6, wherein the organic corrosion inhibitor is added in a quantity of 0.01 to 0.7% by weight in the composition used for the pretreatment.

8. The aqueous composition according to at least one of claims 1 to 6, wherein the organic corrosion inhibitor is added in a quantity of 0.5 to 3% by weight in a concentrate of the composition.

9. The aqueous composition according to at least one of claims 1 to 8, wherein
d) at least one additive selected from
dyes or UV light indicators,
wetting agents or flow control additives, and/or
pH regulators
is added in a quantity of 0.01 to 15% by weight.

10. The aqueous composition according to claim 9, wherein dyes or UV light indicators added are as follows:
Rhodamine B, malachite green, eosin B, sodium fluorescein,
wetting agents or flow control additives and/or pH regulators added are as follows:
acetic acid, ammonia, potassium hydroxide, sodium hydroxide, nitric acid, phosphoric acid, sulfuric acid.

11. The aqueous composition according to claim 9 or 10, wherein the additive is added in a quantity of 0.01 to 5% by weight in the composition used for the pretreatment.

12. The aqueous composition according to claim 9 or 10, wherein the additive is added in a quantity of 0.5 to 15% by weight in a concentrate of the composition.

13. A method for pretreating a metallic construction material or for treating said construction material, wherein an aqueous composition according to any of the preceding claims is applied by rolling, flow coating, knife coating, spraying, sprinkling, brushing, or dipping to a metallic construction material selected from the group consisting of hot-dip-galvanized or rolled steel, electrolytically galvanized steel, steel provided with zinc/aluminum deposition, aluminum/zinc deposition, or zinc/magnesium deposition, aluminum or aluminum alloys, prehardened corrosion-resistant steel, or pure zinc.

14. The method according to claim 13, wherein the metallic construction material is coated only with the aqueous composition.

15. The method according to claim 13, wherein applied atop the dried coating in each case is at least one coating composed of printing ink, foil, paint, paintlike material, powder coating, adhesive and/or adhesive carrier.

## Revendications

1. Composition aqueuse pour le prétraitement d'un matériau de construction métallique choisi dans le groupe constitué par l'acier galvanisé à chaud ou laminé, l'acier galvanisé électrolytiquement, l'acier muni d'un dépôt de zinc/aluminium, d'un dépôt d'aluminium/zinc ou d'un dépôt de zinc/magnésium, l'aluminium ou les alliages d'aluminium, l'acier résistant à la corrosion prétraité ou le zinc pur avant un revêtement supplémentaire ou pour le traitement de ce matériau de construction, obtenue en ce que
a) au moins un verre soluble de sodium, de potassium et/ou d'ammonium,
b) au moins un silane et
c) au moins un inhibiteur de corrosion organique choisi parmi :
les composés hétérocycliques,
les amides d'acide carbonique et/ou
les acétylacétonates,
sont ajoutés à de l'eau en une quantité de 0,01 à 3 % en poids,
le rapport de quantités de a) sur b), à chaque fois y compris les produits de réaction formés à partir de ceux-ci, se situant dans la plage allant de 0,1:1 à 2:1, et la concentration dans la composition utilisée pour le prétraitement
a) en verre soluble étant de 0,5 à 10 % en poids et
b) en silane étant de 0,05 à 2 % en poids.

2. Composition aqueuse selon la revendication 1, **caractérisée en ce que** le silane comprend un ou deux groupes amino.

3. Composition aqueuse selon la revendication 2, **caractérisée en ce que** le silane comprend un ou plusieurs groupes amino, et est choisi dans le groupe constitué par :
l'aminoalkylaminoalkylalkyldialcoxysilane,
la bis(trialcoxysilylalkyl)amine,
l'aminoalkyltrialcoxysilane,
l'aminoalkyl-aminoalkyltrialcoxysilane.

4. Composition aqueuse selon la revendication 2, **caractérisée en ce que** le silane comprend un groupe amino, et est choisi dans le groupe constitué par :
la bis(triéthoxysilylpropyl)amine,
la bis(triméthoxysilylpropyl)amine,
le gamma-aminopropyltriéthoxysilane,
le gamma-aminopropyltriméthoxysilane.

5. Composition aqueuse selon la revendication 2, **caractérisée en ce que** l'aminosilane comprend deux groupes amino ou plus, et est choisi dans le groupe constitué par :
le gamma-uréidopropyltrialcoxysilane,
la N-(3-(triméthoxysilyl)propyl)éthylène-diamine,
le N-bêta-(aminoéthyl)-gamma-aminopropyltriéthoxysilane,
le N-bêta-(aminoéthyl)-gamma-aminopropyltriméthoxysilane,
la N-(gamma-triéthoxysilylpropyl)diéthylène-triamine,
la N-(gamma-triméthoxysilylpropyl)diéthylène-triamine,
le polyaminoalkyléthyldialcoxysilane,
le polyaminoalkylméthyldialcoxysilane.

6. Composition aqueuse selon au moins l'une quelconque des revendications 1 à 5, **caractérisée en ce que**
au moins un composé hétérocyclique, choisi dans le groupe constitué par :
le mercaptobenzothiazole, le benzotriazole, l'imidazole, le benzimidazole, l'hydroxyquinoline, le 2-mercaptobenzimidazole,
au moins un amide d'acide carbonique, choisi dans le groupe constitué par l'urée, la thiourée, la diméthylthiourée, la diéthylthiourée, la dibutylthiourée, l'allylthiourée, la méthylthiourée, le thiosemicarbazide,
et/ou
au moins un acétylacétonate, choisi dans le groupe constitué par ceux des métaux manganèse, vanadium, titane, zirconium,
sont ajoutés.

7. Composition aqueuse selon au moins l'une quelconque des revendications 1 à 6, **caractérisée en ce que** l'inhibiteur de corrosion organique est ajouté en une quantité de 0,01 à 0,7 % en poids dans la composition utilisée pour le prétraitement.

8. Composition aqueuse selon au moins l'une quelconque des revendications 1 à 6, **caractérisée en ce que** l'inhibiteur de corrosion organique est ajouté en une quantité de 0,5 à 3 % en poids dans un concentré de la composition.

9. Composition aqueuse selon au moins l'une quelconque des revendications 1 à 8, **caractérisée en ce que**
d) au moins un additif choisi parmi :
les colorants ou les indicateurs de lumière UV,
les agents mouillants ou les additifs de nivellement et/ou
les régulateurs de pH,
est ajouté en une quantité de 0,01 à 15 % en poids.

10. Composition aqueuse selon la revendication 9, **caractérisée en ce qu'**en tant que colorants ou indicateurs de lumière UV :
la rhodamine B, le vert de malachite, l'éosine B, la fluorescéine de sodium,
en tant qu'agents mouillants ou additifs de nivellement et/ou
en tant que régulateurs du pH : l'acide acétique, l'ammoniac, l'hydroxyde de potassium, l'hydroxyde de sodium, l'acide nitrique, l'acide phosphorique, l'acide sulfurique,
sont ajoutés.

11. Composition aqueuse selon la revendication 9 ou 10, **caractérisée en ce que** l'additif est ajouté en une quantité de 0,01 à 5 % en poids dans la composition utilisée pour le prétraitement.

12. Composition aqueuse selon la revendication 9 ou 10, **caractérisée en ce que** l'additif est ajouté en une quantité de 0,5 à 15 % en poids dans un concentré de la composition.

13. Procédé de prétraitement d'un matériau de construction métallique ou de traitement de ce matériau de construction, **caractérisé en ce qu'**une composition aqueuse selon l'une quelconque des revendications précédentes est appliquée par cylindrage, inondation, raclage, injection, pulvérisation, enduction ou immersion sur un matériau de construction métallique choisi dans le groupe constitué par l'acier galvanisé à chaud ou laminé, l'acier galvanisé électrolytiquement, l'acier muni d'un dépôt de zinc/aluminium, d'un dépôt d'aluminium/zinc ou d'un dépôt de zinc/magnésium, l'aluminium ou les alliages d'aluminium, l'acier résistant à la corrosion prétraité ou le zinc pur.

14. Procédé selon la revendication 13, **caractérisé en ce que** le matériau de construction métallique est uniquement revêtu avec la composition aqueuse.

15. Procédé selon la revendication 13, **caractérisé en ce qu'**à chaque fois au moins un revêtement d'une encre d'impression, d'un film, d'un vernis, d'un matériau analogue à un vernis, d'un vernis en poudre, d'un adhésif et/ou d'un support d'adhésif est appliqué sur le revêtement sec.
